# EUROPEAN PATENT APPLICATION

(11) **EP 3 940 469 A1**
(43) Date of publication of application: **19.01.2022**
(21) Application number: 20769506.5
(22) Date of filing: 26.02.2020
(51) Int. Cl.: G05B 19/05, G05B 19/048, H04L 9/08

(54) **CONTROL DEVICE AND CONTROL SYSTEM**

(30) Priority: 14.03.2019 JP 2019046723
(71) Applicant: OMRON CORPORATION, Kyoto-shi, Kyoto 600-8530 (JP)
(72) Inventor: KAWAI, Ko, Kyoto-shi, Kyoto 600-8530 (JP)
(74) Representative: Mewburn Ellis LLP
(86) International application number: PCT/JP2020/007796
(87) International publication number: WO 2020/184186

(57) **Abstract**

A control device (1) includes a controller (151) configured to execute a control arithmetic calculation controlling a control target; a communication unit (152) configured to execute processing for secure communication using a certificate; a detection unit (153) configured to detect that an end of the certificate approaches; and a notification unit (124) configured to notify that the end of the certificate approaches.

## Description

### TECHNICAL FIELD

The present invention relates to a control device that controls a control target and a control system including the control device.

### BACKGROUND ART

Cipher communication is conventionally used for secure communication between communication devices. For example, WO 2016/147568 (PTL 1) discloses the cryptographic communication in which a pre-shared key is used.

When a public key electronic certificate is expired, the cryptographic communication cannot be performed between the communication devices until the expired public key electronic certificate is updated. A communication device disclosed in WO 2016/147568 includes a lapse determination unit that determines whether the public key electronic certificate of an opposite-party communication device is lapsed, and a lapse notification unit that transmits lapse notification of the public key electronic certificate to the opposite-party communication device when the lapse determination unit determines that the public key electronic certificate is lapsed.

### CITATION LIST

### PATENT LITERATURE

PTL 1: WO 2016/147568

### SUMMARY OF INVENTION

### TECHNICAL PROBLEM

A control device such as a programmable logic controller (PLC) is used to control various manufacturing facilities and various devices disposed in each facility. With recent progress of an information and communication technology (ICT), the control device is also connected to various external devices through a network, and processing executed in the control device is also advanced. With such networking or intelligence, it is assumed that the control device is exposed to various threats. Consequently, there is a need for measures to protect the control device from possible threats.

For example, it is conceivable to apply the cryptographic communication to communication of the control device. In this case, an electronic certificate is stored in the control device. However, an electronic certificate has a time limit. When the electronic certificate is expired, the cryptographic communication cannot be performed.

It is not easy to constantly monitor whether the electronic certificate of the control device is valid. For this reason, as disclosed in WO 2016/147568, it is conceivable to transmit the lapse notification of the public key electronic certificate to the opposite-party communication device. However, also in this case, a user cannot know that the certificate is expired until receiving the notification.

An object of the present invention is to enable the user to easily grasp the lifetime of the certificate stored in the control device.

### SOLUTION TO PROBLEM

In one aspect of the present disclosure, a control device includes a controller configured to execute a control arithmetic calculation controlling a control target, a communication unit configured to execute processing for secure communication using a certificate, a detection unit configured to detect that an end of the certificate approaches, and a notification unit configured to notify that the end of the certificate approaches.

According to the present disclosure, a user can easily grasp the lifetime of the certificate stored in the control device. Consequently, the user can update the certificate before the end of the certificate. The "end of the certificate" means a state in which the certificate cannot be used. For example, the state in which the certificate is lapsed due to the expiration date of the certificate corresponds to the "end of the certificate". The state in which the certificate cannot be used due to a cryptographic lifetime may also be included in the "end of the certificate".

Preferably the end of the certificate is an expiration date of the certificate, and the notification unit issues notification that the expiration date of the certificate approaches at certain timing before the certificate is lapsed.

According to the present disclosure, the user can be notified that the certificate will expire after a certain period. Thus, time for the user to update the certificate can be secured.

Preferably, the control device includes a chassis. The notification unit is provided in the chassis and includes an indicator that makes notification that the end of the certificate approaches by light.

According to the present disclosure, the user can check that the end of the certificate approaches by viewing the control device. The user does not need to prepare a tool that checks the lifetime of the certificate. Consequently, the convenience of the user can be improved.

Preferably, the notification unit includes a sound output unit that generates sound in order to issue notification that the end of the certificate approaches.

According to the present disclosure, the user can check that the end of the certificate approaches by the sound generated from the control device. The user does not need to prepare a tool that checks the lifetime of the certificate. Consequently, the convenience of the user can be improved.

Preferably, the notification unit makes notification that the end of the certificate approaches by an e-mail.

According to the present disclosure, the user can check that the end of the certificate approaches from not only the light or sound generated from control device but also a message of the e-mail.

In another aspect of the present disclosure, a control system includes the control device described above; and a setting device configured to set notification timing before the certificate reaches the end of the certificate to the control device.

According to the present disclosure, the user can easily grasp the lifetime of the certificate stored in the control device. Furthermore, it is possible to make notification that the end of the certificate approaches at timing desired by the user.

Preferably, when a plurality of the certificates are stored in the control device, the setting device collectively displays the expiration dates of the plurality of certificates.

According to the present disclosure, the convenience of the user can be improved because the user can easily grasp the expiration date of each of the plurality of certificates stored in the control device.

In still another aspect of the present disclosure, a control system includes: the control device described above; and a communication device configured to conduct communication with the control device, in which the control device accepts a new certificate before the expiry date, transmits an update request to the communication device, and updates the certificate by discarding an old certificate when the communication device approves the new certificate.

According to the above disclosure, the certificate stored in the control device can be updated by the secure communication.

### ADVANTAGEOUS EFFECTS OF INVENTION

According to the present invention, a user can easily grasp the lifetime of the electronic certificate stored in the control device.

### BRIEF DESCRIPTION OF DRAWINGS

Fig. 1 is an external view illustrating a configuration example of a control device according to an embodiment.
Fig. 2 is a schematic diagram illustrating a hardware configuration example of a control unit constituting the control device of the embodiment.
Fig. 3 is a schematic diagram illustrating a hardware configuration example of a security unit constituting the control device 1 of the embodiment.
Fig. 4 is a schematic diagram illustrating a hardware configuration example of the safety unit constituting the control device 1 of the embodiment.
Fig. 5 is a schematic diagram illustrating a typical example of a control system including the control device of the embodiment.
Fig. 6 is a schematic diagram illustrating a functional configuration example included in a control unit of the embodiment.
Fig. 7 is a schematic diagram illustrating an OPC-UA communication system.
Fig. 8 is a view illustrating a configuration example of the control device that make a notification of an expiration date of a certificate.
Fig. 9 is a view illustrating another configuration example of the control device that make the notification of the expiration date of the certificate.
Fig. 10 is a view illustrating an example of notification setting.
Fig. 11 is a view illustrating another example of the notification setting.
Fig. 12 is a schematic diagram illustrating states of an OPC-UA server and an OPC-UA client during normal operation.
Fig. 13 is a view illustrating step of issuing a new certificate in a certificate updating processing.
Fig. 14 is a view illustrating step of transmitting the new certificate and step of notifying an update request in the certificate updating processing.
Fig. 15 is a view illustrating step of approving the new certificate in the certificate updating processing.
Fig. 16 is a view illustrating step of discarding an old certificate in the certificate updating processing.
Fig. 17 is a schematic diagram illustrating a processor including a plurality of cores.

### DESCRIPTION OF EMBODIMENTS

With reference to the drawings, an embodiment of the present invention will be described in detail. The same or equivalent portion in the drawings is denoted by the same reference numeral, and the description will not be repeated.

### <A. Control device 1>

A configuration of a control device 1 according to the embodiment will be described.

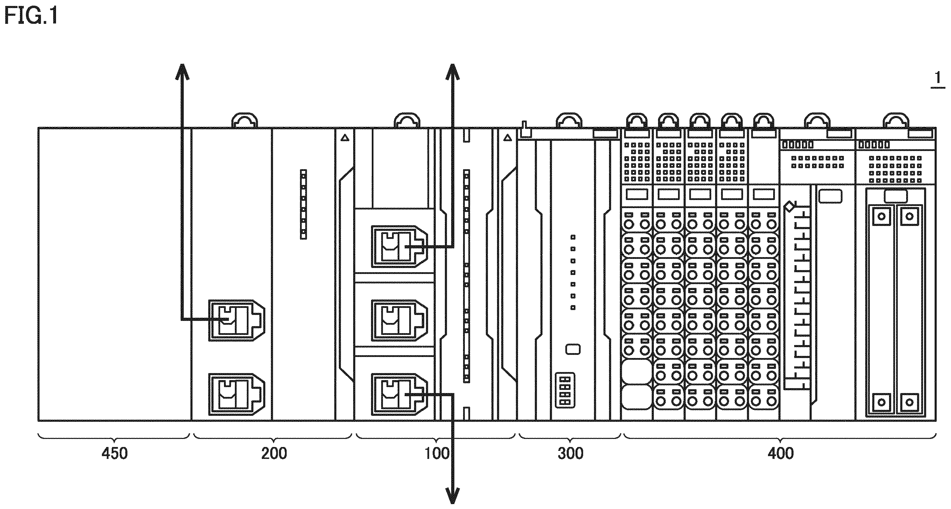

Fig. 1 is an external view illustrating a configuration example of control device 1 of the embodiment. Referring to Fig. 1, control device 1 includes a control unit 100, a security unit 200, a safety unit 300, one or a plurality of functional units 400, and a power supply unit 450.

Control unit 100 and security unit 200 are connected to each other through an arbitrary data transmission path (for example, PCI Express (registered trademark), Ethernet (registered trademark), or the like). Control unit 100 is connected to safety unit 300 and the one or the plurality of functional units 400 through an internal bus (not illustrated).

Control unit 100 executes central processing in control device 1. Control unit 100 executes a control arithmetic calculation in order to control a control target according to an arbitrarily-designed requirement specification. In comparison with the control arithmetic calculation executed by safety unit 300, the control arithmetic calculation executed by control unit 100 is also referred to as "standard control". In the configuration example of Fig. 1, control unit 100 includes one or a plurality of communication ports. Control unit 100 corresponds to a processing execution unit that executes the standard control according to a standard control program.

Security unit 200 is connected to control unit 100, and is in charge of a security function for control device 1. In the configuration example of Fig. 1, security unit 200 includes one or a plurality of communication ports. Details of the security function provided by security unit 200 will be described later.

Safety unit 300 executes the control arithmetic calculation independently of control unit 100 in order to implement a safety function regarding the control target. The control arithmetic calculation executed by safety unit 300 is also referred to as "safety control". Usually, the "safety control" is designed to satisfy a requirement implementing the safety function defined in IEC 61508 or the like. The "safety control" collectively refers to processing for preventing the safety of a person from being threatened by equipment, a machine, or the like.

Functional unit 400 provides various functions in order to implement the control for various control targets by control device 1. Functional unit 400 may typically include an I/O unit, a safety I/O unit, a communication unit, a motion controller unit, a temperature adjustment unit, and a pulse counter unit. A digital input (DI) unit, a digital output (DO) unit, an analog output (AI) unit, an analog output (AO) unit, a pulse catch input unit, and a composite unit obtained by mixing a plurality of types can be cited as an example of the I/O unit. The safety I/O unit is in charge of I/O processing regarding the safety control.

Power supply unit 450 supplies power having a predetermined voltage to each unit constituting control device 1.

### <B. Hardware configuration of each unit>

A hardware configuration example of each unit constituting control device 1 of the embodiment will be described below.

### (b1: Control unit 100)

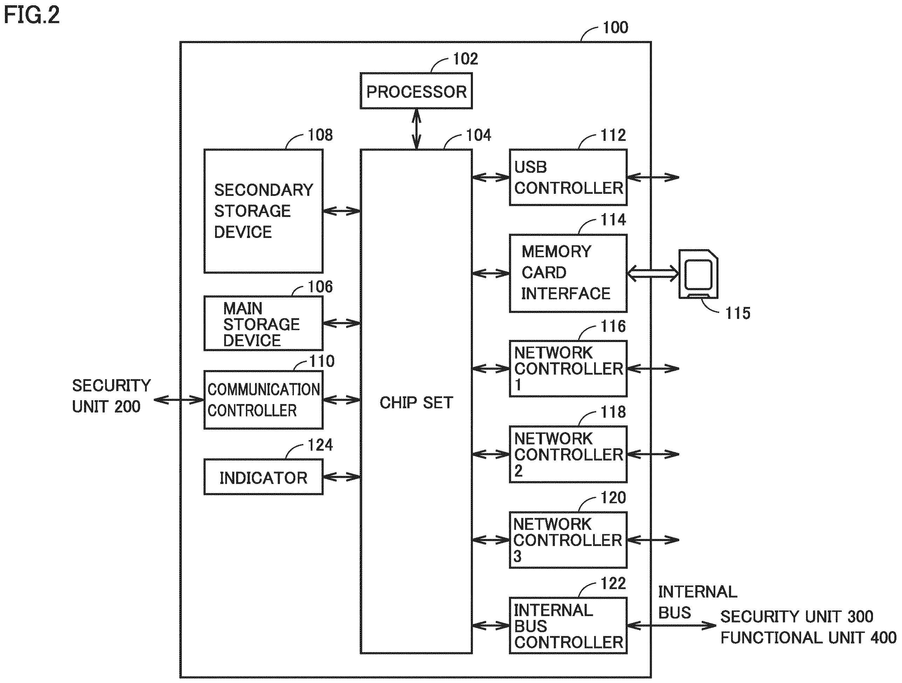

Fig. 2 is a schematic diagram illustrating the hardware configuration example of control unit 100 constituting control device 1 of the embodiment. Referring to Fig. 2, control unit 100 includes a processor 102 such as a central processing unit (CPU) or a graphical processing unit (GPU), a chip set 104, a main storage device 106, a secondary storage device 108, a communication controller 110, a universal serial bus (USB) controller 112, a memory card interface 114, network controllers 116, 118, 120, an internal bus controller 122, and an indicator 124 as main components.

Processor 102 reads various programs stored in secondary storage device 108, develops the programs in main storage device 106, and executes the programs to implement the control arithmetic calculation regarding the standard control and various pieces of processing as described later. As processor 102, a configuration including a plurality of cores may be adopted, or a plurality of processors 102 may be disposed. That is, control unit 100 includes one or a plurality of processors 102 and/or processor 102 having one or the plurality of cores. Chip set 104 mediates exchanges of data between processor 102 and each component, thereby implementing the processing of entire control unit 100.

In addition to the system program, a control program that operates on an execution environment provided by the system program is stored in secondary storage device 108. Secondary storage device 108 may store a key (a secret key or a public key) and a certificate for the cryptographic communication.

Communication controller 110 is in charge of the data exchange with security unit 200. For example, a communication chip compatible with PCI Express and Ethernet can be adopted as communication controller 110.

USB controller 112 is in charge of the data exchange with any information processing device through USB connection.

Memory card interface 114 is configured such that memory card 115 is detachably attached, and can write the data such as the control program and various settings in memory card 115 or read the data such as the control program and various settings from memory card 115.

Each of network controllers 116, 118, 120 is in charge of the data exchange with any device through the network. Network controllers 116, 118, 120 may adopt an industrial network protocol such as EtherCAT (registered trademark), EtherNet/IP (registered trademark), DeviceNet (registered trademark), or CompoNet (registered trademark).

Internal bus controller 122 is in charge of the data exchange with safety unit 300 and one or a plurality of functional units 400 constituting control device 1. A communication protocol unique to a manufacturer may be used, or a communication protocol that is the same as or compliant with any of the industrial network protocols may be used as the internal bus.

Indicator 124 makes a notification of an operation state of control unit 100 and the like, and includes one or a plurality of LEDs and the like disposed on a unit surface. Indicator 124 corresponds to a notification unit that makes the notification that an end of the certificate approaches. Consequently, indicator 124 is also notice means that give an advance notice that the end of the certificate approaches to a user.

Although Fig. 2 illustrates the configuration example in which necessary functions are provided by processor 102 executing the program, some or all of these provided functions may be implemented using a dedicated hardware circuit (for example, an application specific integrated circuit (ASIC) or a field-programmable gate array (FPGA)). Alternatively, a main part of control unit 100 may be implemented using hardware (for example, an industrial personal computer based on a general-purpose personal computer) according to a general-purpose architecture. In this case, a plurality of operating systems (OSs) having different uses may be executed in parallel using a virtualization technology, and necessary applications may be executed on each OS.

### (b2: Security unit 200)

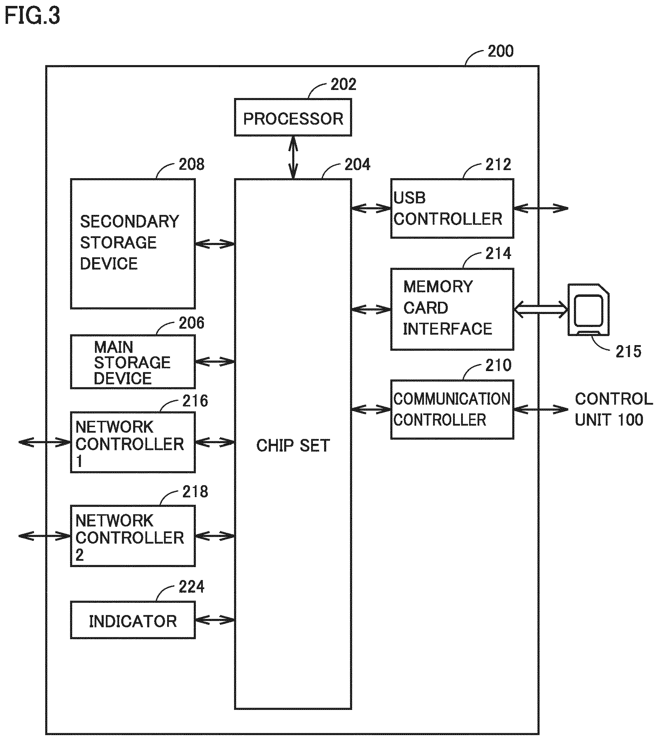

Fig. 3 is a schematic diagram illustrating a hardware configuration example of security unit 200 constituting control device 1 of the embodiment. Referring to Fig. 3, security unit 200 includes a processor 202 such as a CPU or a GPU, a chip set 204, a main storage device 206, a secondary storage device 208, a communication controller 210, a USB controller 212, a memory card interface 214, network controllers 216, 218, and an indicator 224 as main components.

Processor 202 reads various programs stored in secondary storage device 208, develops the programs in main storage device 206, and executes the programs to implement various security functions as described later. Chip set 204 mediates exchange of data between processor 202 and each component, thereby implementing processing of entire security unit 200.

In addition to the system program, secondary storage device 208 stores a security system program that operates on the execution environment provided by the system program. Secondary storage device 208 may store a key (a secret key or a public key) and a certificate for the cryptographic communication.

Communication controller 210 is in charge of the data exchange with control unit 100. For example, similarly to control unit 100, a communication chip compatible with PCI Express, Ethernet, or the like can be adopted as communication controller 210.

USB controller 212 is in charge of the data exchange with any information processing device through the USB connection.

Memory card interface 214 is configured such that memory card 215 is detachably attached, and can write the data such as the control program and various settings in memory card 215 or read the data such as the control program and various settings from memory card 215.

Each of network controllers 216, 218 is in charge of the data exchange with any device through the network. Network controllers 216,218 may adopt a general-purpose network protocol such as Ethernet.

Indicator 224 makes the notification of an operation state of security unit 200 and the like, and includes one or a plurality of LEDs and the like disposed on a unit surface. Indicator 224 corresponds to the notification unit that makes the notification that the end of the certificate stored in security unit 200 approaches. Consequently, indicator 224 is also notice means that give the advance notice that the end of the certificate approaches to the user.

Although Fig. 3 illustrates the configuration example in which processor 202 executing the program to provide necessary functions, some or all of these provided functions may be implemented using a dedicated hardware circuit (for example, an ASIC or a FPGA). Alternatively, the main part of security unit 200 may be implemented using hardware (for example, an industrial personal computer based on a general-purpose personal computer) according to a general-purpose architecture. In this case, the plurality of OSs having different uses may be executed in parallel using a virtualization technology, and necessary applications may be executed on each OS.

### (b3: Safety unit 300)

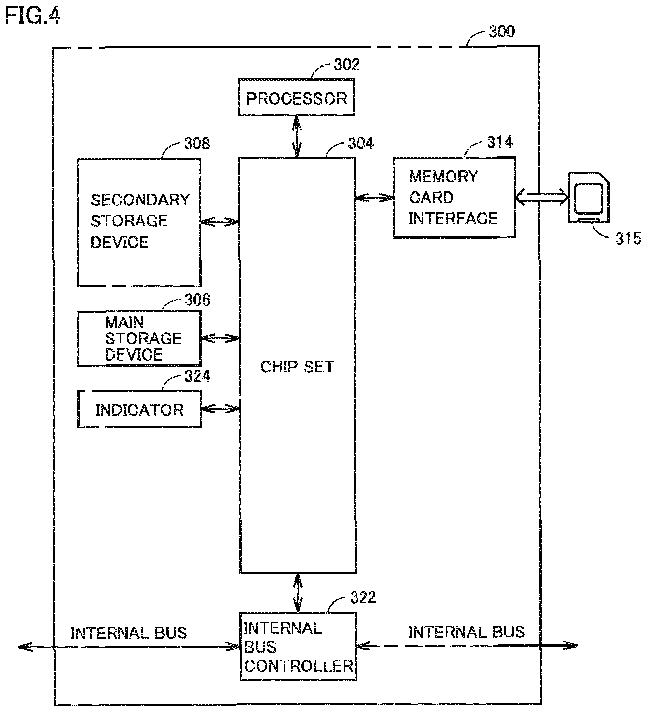

Fig. 4 is a schematic diagram illustrating a hardware configuration example of safety unit 300 constituting control device 1 of the embodiment. Referring to Fig. 4, safety unit 300 includes a processor 302 such as a CPU and a GPU, a chip set 304, a main storage device 306, a secondary storage device 308, a memory card interface 314, an internal bus controller 322, and an indicator 324 as main components.

Processor 302 reads various programs stored in secondary storage device 308, develops the programs in main storage device 306, and executes the programs to implement the control arithmetic calculation regarding the safety control and various pieces of processing as described later. Chip set 304 mediates exchange of data between processor 302 and each component, thereby implementing processing of entire safety unit 300.

In addition to the system program, a safety program that operates on an execution environment provided by the system program is stored in secondary storage device 308.

Memory card interface 314 is configured such that memory card 315 is detachably attached, and can write the data such as the safety program and various settings in memory card 315 or read the data such as the safety program and various settings from memory card 315.

Internal bus controller 322 is in charge of the data exchange with control unit 100 through the internal bus.

Indicator 324 makes the notification of an operation state of safety unit 300 and the like, and includes one or a plurality of LEDs and the like disposed on a unit surface.

Although Fig. 4 illustrates the configuration example in which processor 302 executing the program to provide necessary functions, some or all of these provided functions may be implemented using a dedicated hardware circuit (for example, an ASIC or a FPGA). Alternatively, the main part of safety unit 300 may be implemented using hardware (for example, an industrial personal computer based on a general-purpose personal computer) according to a general-purpose architecture. In this case, the plurality of OSs having different uses may be executed in parallel using a virtualization technology, and necessary applications may be executed on each OS.

### <C. Control system 10>

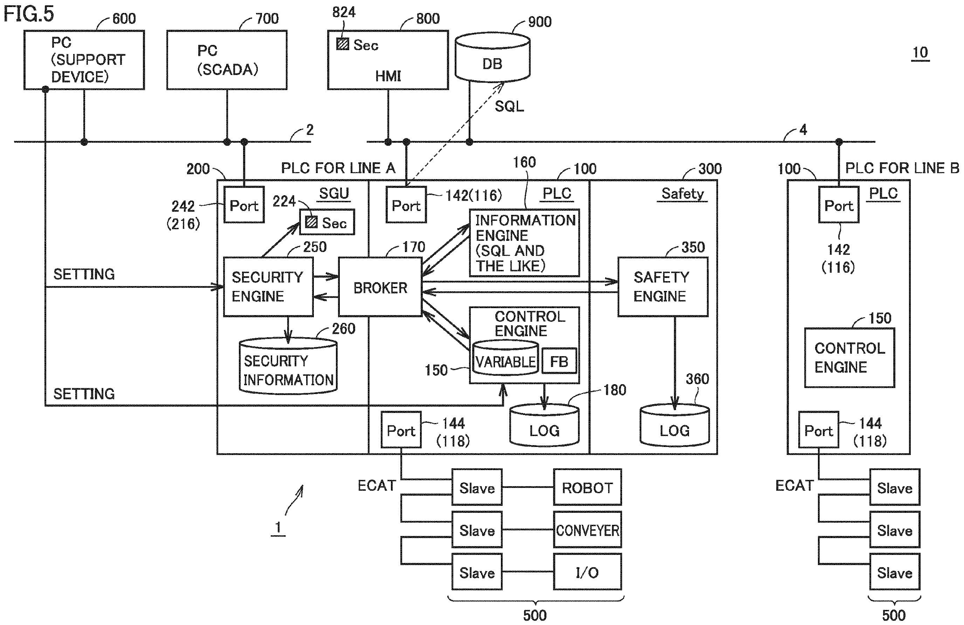

A typical example of a control system 10 including control device 1 of the embodiment will be described below. Fig. 5 is a schematic diagram illustrating a typical example of control system 10 including control device 1 of the embodiment.

As an example, control system 10 in Fig. 5 sets two lines (line A and line B) as the control target. Typically, it is assumed that a robot capable of giving arbitrary physical action to a workpiece on a conveyor that conveys the workpiece is disposed in each line in addition to the conveyor.

Control unit 100 is disposed in each of line A and line B. In addition to control unit 100 that is in charge of line A, security unit 200 and safety unit 300 constitute control device 1. For convenience of description, functional unit 400 and power supply unit 450 are not illustrated in Fig. 5.

Security unit 200 of control device 1 is connected to a first network 2 through a communication port 242 (network controller 216 in Fig. 3). It is assumed that a support device 600 and a supervisory control and data acquisition (SCADA) device 700 are connected to first network 2. Ethernet, an object linking and embedding for process control unified architecture (OPC-UA), or the like can be adopted as first network 2.

Support device 600 can access at least control unit 100, and provides functions such as preparation of a program executed by each unit included in control device 1, debugging, and setting of various parameters to the user. A tool for a purpose such as development may be installed in support device 600. For example, the tool is "Sysmac Studio" (product of OMRON Corporation).

SCADA device 700 presents various types of information obtained by the control arithmetic calculation in control device 1 to an operator, and generates an internal command or the like for control device 1 according to an operation from the operator. SCADA device 700 also has a function of collecting the data handled by control device 1.

Control unit 100 of control device 1 is connected to second network 4 through a communication port 142 (network controller 116 in Fig. 2). It is assumed that a human machine interface (HMI) 800 and a database 900 are connected to second network 4.

HMI 800 can be implemented by a personal computer. HMI 800 presents various types of information obtained by the control arithmetic calculation in control device 1 to the operator, and generates an internal command or the like for control device 1 according to the operation from the operator. HMI 800 may store the certificate for the cryptographic communication with control device 1. HMI 800 is a setting device that sets notification timing before the certificate reaches the end of the certificate to control device 1.

HMI 800 can be configured to be portable by a maintenance person of the FA. Database 900 collects various data (for example, information about traceability measured from each workpiece) transmitted from control device 1.

Control unit 100 of control device 1 is connected to one or a plurality of field devices 500 through a communication port 144 (network controller 118 in Fig. 2). Field device 500 includes a sensor and detector that collect various types of information necessary for the control arithmetic calculation from the control target, an actuator that gives some action to the control target, and the like. In the example of Fig. 5, field device 500 includes a robot that gives some external action to the workpiece, the conveyor that conveys the workpiece, and the I/O unit that exchanges a signal with the sensor or the actuator disposed in the field.

Similarly, control unit 100 in charge of line B is connected to one or a plurality of field devices 500 through communication port 144 (network controller 118 in Fig. 2).

When attention is paid to a functional aspect of control device 1, control unit 100 includes a control engine 150 that is a processing execution unit that executes the control arithmetic calculation regarding the standard control and an information engine 160 that exchanges the data with an external device. Security unit 200 includes a security engine 250 that implements security functions as described below. Safety unit 300 includes a safety engine 350 that is a processing execution unit that executes the control arithmetic calculation regarding the safety control.

Each engine is implemented by an arbitrary hardware element such as a processor of each unit, an arbitrary software element such as various programs, or a combination of these elements. Each engine can be mounted on any form.

Furthermore, control device 1 includes a broker 170 that mediates the exchange between the engines. An entity of broker 170 may be disposed in one or both of control unit 100 and security unit 200.

Control engine 150 holds a variable table, a function block (FB), and the like necessary for the execution of the control arithmetic calculation controlling the control target. Each variable stored in the variable table is periodically collected with a value acquired from field device 500 by I/O refresh processing, and each value is periodically reflected to field device 500. A log of the control arithmetic calculation in control engine 150 may be stored in a log database 180.

Information engine 160 executes arbitrary information processing on data (a variable value held in the variable table) held by control unit 100. Typically, information engine 160 includes a processing of periodically transmitting the data held by control unit 100 to database 900 and the like. SQL or the like is used for the transmission of such data.

Security engine 250 executes detection of an unauthorized intrusion generated in control device 1, processing corresponding to the detected unauthorized intrusion, determination of generation of an incident, processing corresponding to the generated incident, and the like. Behavior of security engine 250 is stored as security information 260.

Security engine 250 makes the notification that some event regarding security is generated or a level of the event regarding the generated security using indicator 224.

Safety engine 350 corresponds to detection means that detects whether any unauthorized intrusion is generated in control device 1. Safety engine 350 acquires and reflects the safety I/O variable necessary for executing the control arithmetic calculation regarding the safety control through control unit 100. The log of the safety control in safety engine 350 may be stored in a log database 360.

For example, when security engine 250 detects some event, broker 170 changes operations of control engine 150, information engine 160, and safety engine 350.

### <D. Functional configuration example of control unit 100>

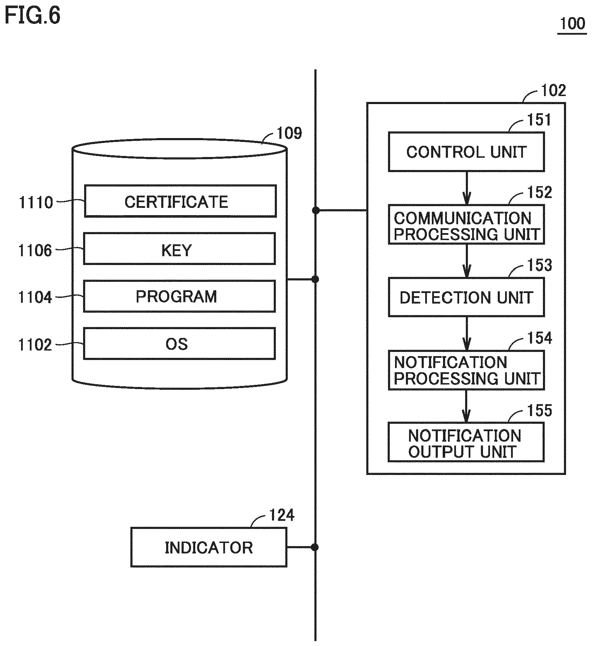

Fig. 6 is a schematic diagram illustrating a functional configuration example included in control unit 100 of the embodiment. Referring to Fig. 6, in control unit 100, storage unit 109 (including secondary storage device 108 or main storage device 106) stores an OS 1102, a program 1104, a key 1106, and a certificate 1110. For example, key 1106 is a secret key or a public key.

Processor 102 implements a controller 151, a communication processing unit 152, a detection unit 153, a notification processing unit 154, and a notification output unit 155 by periodically executing program 1104 under OS 1102.

Controller 151 executes the control arithmetic calculation in order to control the control target. Consequently, controller 151 is a main part of control engine 150. Communication processing unit 152 implements a communication unit that executes processing for secure communication using the certificate.

Detection unit 153 detects that the end of the certificate approaches. For example, detection unit 153 previously acquires the expiration date of the certificate, and determines whether current time is within a certain period before the expiration date. When the current time is within the certain period before the expiration date of the certificate, detection unit 153 detects that the expiration date of the certificate approaches. Notification processing unit 154 executes processing for notifying that the end of the certificate approaches. Notification output unit 155 controls the notification unit including indicator 124 so as to output the notification.

### <E. Cryptographic communication>

Hereinafter, the OPC-UA will be exemplified as a standard applicable to the embodiment. The OPC-UA is a standard for interoperability for the purpose of the secure and reliable data exchange in an industrial automation field and in other industries. Security measures in the OPC-UA include prevention of eavesdropping of messages, prevention of falsification of messages, and measures against message attacks that lower system operation rates.

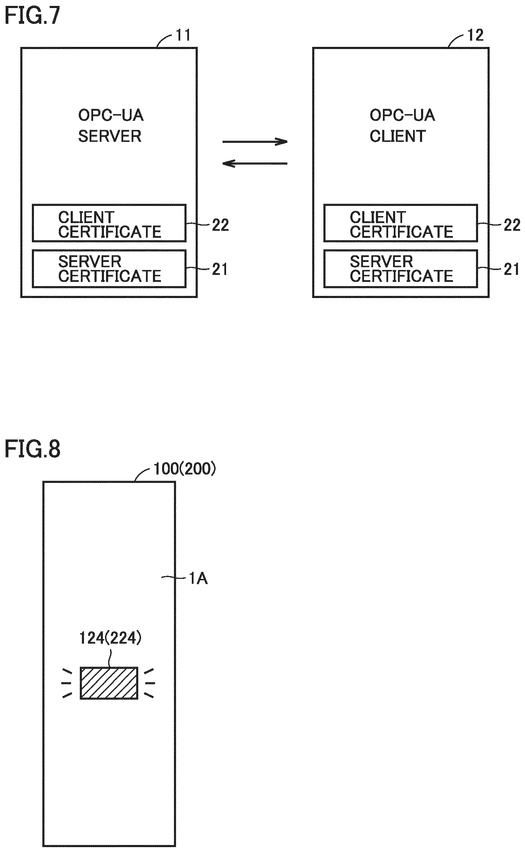

Fig. 7 is a schematic diagram illustrating an OPC-UA communication system. An OPC-UA server 11 and an OPC-UA client 12 perform the communication according to the OPC-UA. The certificate for authentication is required for performing the communication in the OPC-UA. Each of OPC-UA server 11 and OPC-UA client 12 stores a server certificate 21 and a client certificate 22.

OPC-UA server 11 and OPC-UA client 12 are defined according to a relationship in which the information is exchanged. For example, control unit 100 functions as OPC-UA server 11. For example, HMI 800 can become OPC-UA client 12. Hereinafter, "OPC-UA server 11" and "OPC-UA client 12" will be simply referred to as "server 11" and "client 12".

A procedure in the case of using a self-signed certificate as the certificate for authentication is as follows. The self-signed certificate is produced in each of server 11 and client 12. Subsequently, the self-signed certificate of the client is imported to server 11. On the other hand, the self-signed certificate of the server is imported to client 12. Each of the server 11 and OP client 12 transmits its own certificate to the other party. Each of server 11 and client 12 performs authentication by matching the certificate transmitted from the other party with the already-imported certificate.

A certificate authority (CA) signature certificate may be used as the certificate for authentication. In this case, for example, a global discovery server (GDS) produces the CA certificate. The GDS produces the CA signature certificates for server 11 and client 12. Server 11 and client 12 receive the CA signature certificate and the CA certificate.

Server 11 and client 12 transmit the CA signature certificate to each other, and collate the CA signature certificate transmitted from the other party using the CA certificate. Thus, the authentication is performed. A method for transferring the certificate is not particularly limited. For example, the e-mail may be used, or a medium such as a USB memory may be used.

### <F. Problems regarding lifetime of certificate>

In the embodiment, the "state in which the certificate has reached the end of the certificate" means that the current certificate cannot be used due to expiration of the validity period of the certificate, vulnerability of the cryptograph, or the like.

As described above, the certificate has the expiration date. When the expiration date elapses, OPC-UA communication cannot be performed because the certificate is expired. For example, in control system 10 of Fig. 5, when the OPC-UA communication cannot be performed, the manufacturing line may be stopped.

As a method for checking the expiration date of the certificate, there is a method using a tool (for example, "Sysmac Studio" described above). However, in this method, the user must actively monitor information. For this reason, a possibility that the user does not notice that the expiration date of the certificate approaches or the validity period is expired (the certificate is expired) needs to be considered.

In addition, when a large number of OPC-UA devices (for example, PLCs) are connected to the network, the user needs to monitor each device. When updating the certificate, the user needs to update the certificate for each device. This increases the man-hours of the user.

Furthermore, there is also a need to consider that a cryptographic technique has the "lifetime". For example, there is a possibility that the cryptographic vulnerability is found before the certificate is expired. In such a case, it is necessary to update the certificate.

Furthermore, there is a possibility that server 11 and client 12 are provided by different manufacturers. There is also a possibility that the number of OPC-UA clients 12 is plural. Also in such a case, the man-hour of the user increases in order to update the certificate.

### <G. Notification of certificate lifetime>

In the embodiment, it is notified that the end of the certificate approaches at certain timing before the certificate reaches the end of the certificate. For example, when the certificate is about to expire, the user can know that the certificate is about to expire by receiving the notification from control device 1. Accordingly, the man-hours of the user for managing the expiration date of the certificate can be decreased. In addition, the expiration date of the certificate can be managed without connecting the tool to control device 1. Further, time for which the user updates the certificate can be ensured by receiving the notification before the expiration of the certificate.

Fig. 8 is a view illustrating a configuration example of control device 1 that make the notification of the expiration date of the certificate. Referring to Fig. 8, control unit 100 includes a chassis 1A. For a certain period (for example, 30 days) before the certificate is expired, control unit 100 causes indicator 124 (LED) to blink. Accordingly, the user can easily grasp that the end of the certificate approaches by viewing control unit 100. Instead of control unit 100, security unit 200 may blink indicator 224 (LED) of security unit 200.

The notification period may be set by the user. In addition, a blinking interval or an emission color may be changed in accordance with the number of days remaining until the expiration.

In Fig. 8, indicator 124 is illustrated as one LED, and indicator 124 may include an LED provided for each port. Each LED may start the blinking when the certificate is about to be expired.

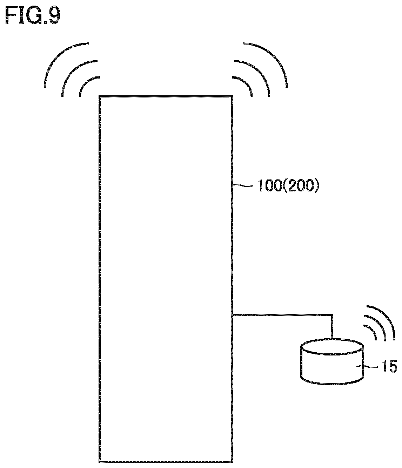

Fig. 9 is a view illustrating another configuration example of control device 1 that make the notification of the expiration date of the certificate. Referring to Fig. 9, control unit 100 may generate sound when the expiration date of the certificate approaches. Alternatively, control unit 100 may cause a speaker 15 to output the sound. Speaker 15 may be an AI speaker (smart speaker). Instead of control unit 100, security unit 200 may generate sound, or security unit 200 may cause speaker 15 to output the sound.

In addition, the notification device connected to control unit 100 is not limited to the speaker. For example, the notification device may be an indicator light.

In addition, control unit 100 may make the notification that the expiration date of the certificate approaches through HMI 800, or may make the notification by an SMS, the e-mail, or the like. The notification may be performed not only on the server side but also on the client side. The user can check that the end of the certificate approaches from not only the light or sound generated from control unit 100 but also a message of the e-mail.

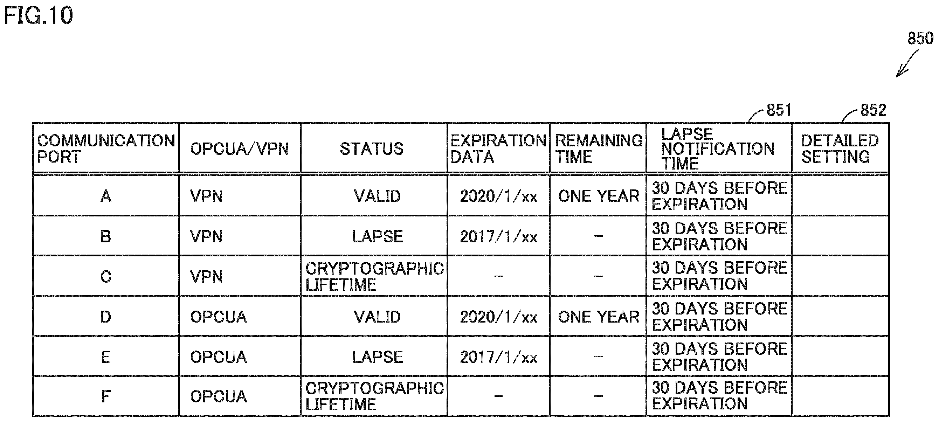

Fig. 10 is a view illustrating an example of notification setting. For example, a user interface screen 850 in Fig. 10 is displayed on HMI 800. User interface screen 850 displays the communication port, a secure path (OPC-UA/VPN), the status of the certificate, the expiration date of the certificate, and the remaining expiration date from the current time of the certificate in a list format. The convenience of the user can be improved because the user can easily grasp the expiration date of each of the plurality of certificates stored in control device 1.

Further, user interface screen 850 receives setting of lapse notification time and a detailed setting. The lapse notification time may be individually set for each communication port (in other words, for each certificate), or be collectively set. For example, the mouse cursor is placed on the display of "lapse notification time" in a column 851, and the mouse is clicked. This enables collective setting. In this case, for example, the notification time is set to "30 days before lapse". Similarly, the mouse is clicked while the mouse cursor is placed over the display of "detailed settings" in a column 852, whereby the collective setting can be performed.

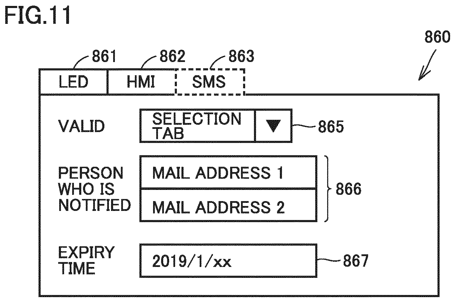

Fig. 11 is a view illustrating another example of the notification setting. For example, a user interface screen 860 is displayed on HMI 800. User interface screen 860 receives selection of the notification method by selection of a tab. User interface screen 860 includes an LED tab 861, an HMI tab 862, and an SMS tab 863. When SMS tab 863 is selected, a column 865 designating that the selection tab is valid, an input column 866 inputting the e-mail address, and an input region 867 inputting lapse time are displayed. Input column 866 can accept a plurality of e-mail addresses such that both the server side and the client side can be notified of the lapse time. Input column 866 may be configured such that at least three e-mail addresses can be input.

The notification timing may be set by default in a predetermined period (for example, 30 days) before the input lapse time. Alternatively, user interface screen 860 may be configured to receive the input of the user regarding the notification timing.

For example, when the cryptograph itself reaches the end of lifetime such as the case where a security hole is found, HMI 800 may perform the display notifying the user that the cryptographic strength needs to be increased.

### <H. Update of certificate>

Both the OPC-UA server side and the OPC-UA client side need to be notified of the update of the certificate. However, a notification target person on the client side may be different from a notification target person on the server side. For example, such a case may occur when manufacturers are different between the server and the client. For this reason, requesting both the server side and the client side to update the certificate increases a burden on the user of the control system. Furthermore, in the case of control system 10 in Fig. 5, there is a possibility that the number of devices that is a certificate update target becomes large (for example, in units of several hundred devices).

When the certificate is automatically updated, the burden can be reduced. However, in terms of ensuring security, desirably the certificate is updated after authentication of the user. In an environment before the certificate is expired, the certificate can be updated under secure communication. That is, the certificate can be updated by the secure communication using the certificate before update (old certificate).

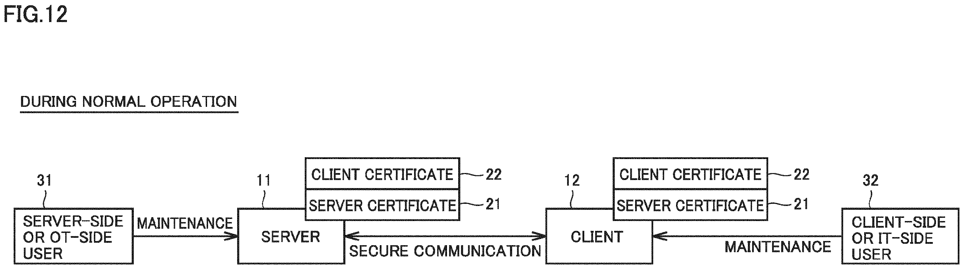

Fig. 12 is a schematic diagram illustrating states of an OPC-UA server and an OPC-UA client during normal operation. As illustrated in Fig. 12, each of server 11 (OPC-UA server) and client 12 (OPC-UA client) has a server certificate 21 and a client certificate 22, and the secure communication is conducted between server 11 and client 12. A server-side (or operation technology (OT) side) user 31 performs maintenance of server 11. Meanwhile, a client-side (or information technology (IT) side) user 32 performs maintenance of client 12.

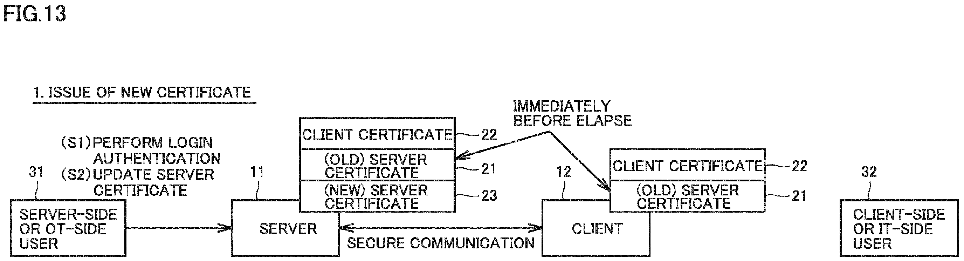

Fig. 13 is a view illustrating step of issuing a new certificate in a certificate updating processing. Although the update of server certificate 21 will be representatively described below, the update of client certificate 22 can also be performed by a procedure similar to the procedure described below.

In order to issue the new certificate, first, in step S1, server-side user 31 logs in to server 11 using login authentication. When the login is successful, in step S2, server-side user 31 updates the server certificate of server 11. Specifically, server certificate 23 is stored in server 11. Consequently, both the old server certificate (server certificate 21) and the new server certificate (server certificate 23) are stored in server 11. The old server certificate (server certificate 21) is immediately before elapse, but is still valid. Consequently, secure communication can be conducted between server 11 and client 12.

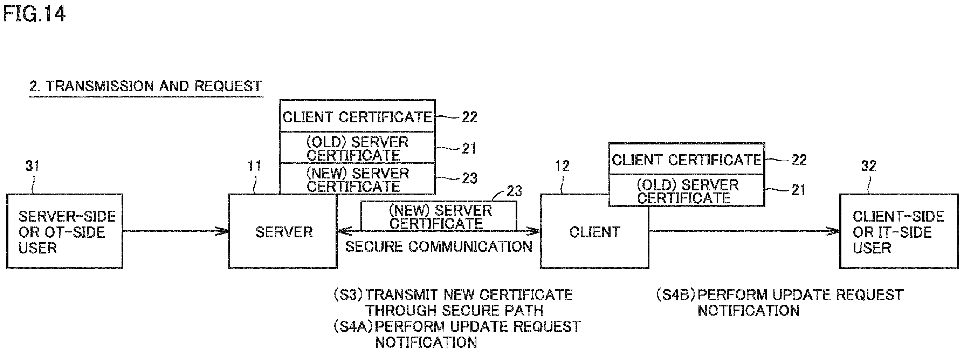

Fig. 14 is a view illustrating step of transmitting the new certificate and step of notifying an update request in the certificate updating processing. In step S3, server 11 transmits the new server certificate (server certificate 23) to client 12 through the secure path. Furthermore, in step S4A, server 11 notifies client 12 of a request for updating the server certificate. In step S4B, client-side user 32 receives the notification of a server certificate update request from client 12. A method for receiving the update request notification is not particularly limited. For example, client-side user 32 may receive the notification of the update request for the server certificate from the e-mail sent from client 12.

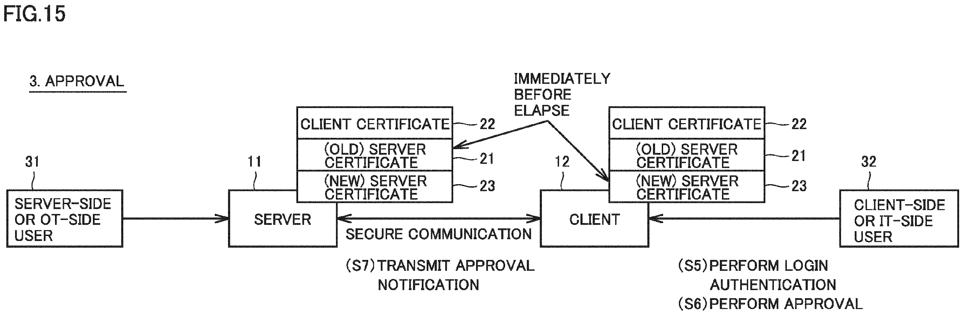

Fig. 15 is a view illustrating step of approving the new certificate in the certificate updating processing. In step S5, the client-side user 32 logs in to client 12 using the login authentication. In step S6, client-side user 32 approves the new server certificate (server certificate 23) stored in client 12. Thus, in step S7, client 12 transmits an approval notification to server 11.

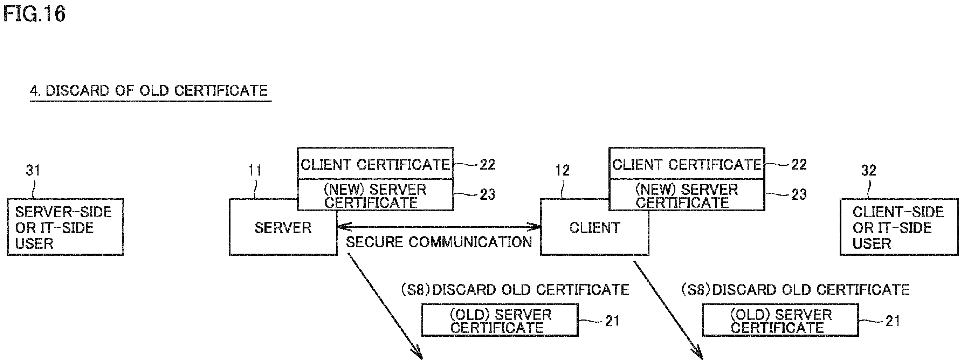

Fig. 16 is a view illustrating step of discarding the old certificate in the certificate updating processing. In step S8, each of server 11 and client 12 logs in to client 12 using the login authentication. In step S6, client-side user 32 discards the old server certificate (server certificate 21). Thus, the update of the server certificate is completed in each of server 11 and client 12.

As illustrated in Figs. 13 to 16, in the embodiment, the certificate can be updated using the old certificate while the secure path is ensured between the server and the client. In addition, the certificate can be updated after the user approval. When the number of devices that is the update target of the certificate is large, the certificates in which the expiration dates approach may be listed, and the certificate selected from the list may be updated. The user selects the update target from the list, whereby the certificate can be updated after the approval of the user while the certificates are collectively updated.

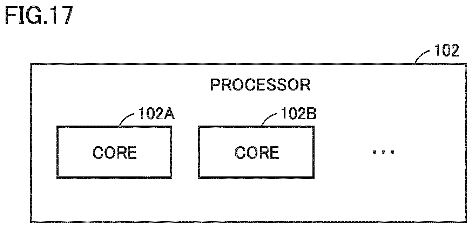

Preferably the management or update of the certificate (or the update of firmware) is prevented from affecting the control processing as much as possible. As illustrated in Fig. 17, when processor 102 of control unit 100 includes a plurality of cores (core 102A, core 102B, ···), the certificate update processing may be executed by a core different from the core that executes the user program. The certificate update processing may be executed by the system core instead of the core that periodically executes the program.

Alternatively, security unit 200 may collectively manage certificates instead of control unit 100. Consequently, processor 202 may implement the detection means instead of processor 102, and indicator 224 may implement the notification means instead of indicator 124.

Although the OPC-UA has been exemplified in the embodiment, a secure socket layer (SSL) can also be applied to the embodiment as the secure communication.

### <I. Appendix>

As described above, the embodiment includes the following disclosure.
1. A control device (1) including:
   a controller (151) configured to execute a control arithmetic calculation controlling a control target;
   a communication unit (152) configured to execute processing for secure communication using a certificate;
   a detection unit (153) configured to detect that an end of the certificate approaches; and
   a notification unit (124) configured to notify that the end of the certificate approaches.
2. The control device (1) described in 1, in which
   the end of the certificate is an expiration date of the certificate, and
   the notification unit issues notification that the expiration date of the certificate approaches at certain timing before the certificate is lapsed.
3. The control device (1) described in 1 or 2 further including a chassis (1A),
   in which the notification unit (124) includes an indicator (124) that is provided in the chassis (1A) and notifies that the end of the certificate approaches by light.
4. The control device (1) described in 1 or 2, in which the notification unit includes a sound output unit that generates sound in order to issue notification that the end of the certificate approaches.
5. The control device (1) described in 3 or 4, in which the notification unit issues notification that the end of the certificate approaches by an e-mail.
6. A control system (10) including:
   the control device described any one of 1 to 5; and
   a setting device (800) configured to set notification timing before the certificate reaches the end of the certificate to the control device (1).
7. The control system (10) described in 6, in which when a plurality of the certificates are stored in the control device (1), the setting device (800) collectively displays the expiration dates of the plurality of certificates.
8. A control system (10) including:
   the control device (1) described any one of 1 to 5; and
   a communication device (800) configured to conduct communication with the control device (1),
   in which the control device (1) accepts a new certificate before the expiry date, transmits an update request to the communication device, and updates the certificate by discarding an old certificate when the communication device (800) approves the new certificate.

It should be considered that the disclosed embodiments are an example in all respects and not restrictive. The scope of the present invention is defined by not the description above, but the claims, and it is intended that all modifications within the meaning and scope of the claims and their equivalents are included in the present invention.

### REFERENCE SIGNS LIST

1: control device, 1A: chassis, 2: first network, 4: second network, 10: control system, 11: OPC-UA server, 12: OPC-UA client, 15: speaker, 21, 23: server certificate, 22: client certificate, 31: server-side or OT-side user, 32: client-side or IT-side user, 100: control unit, 102, 202, 302: processor, 102A, 102B: core, 104, 204, 304: chip set, 106, 206, 306: main storage device, 108, 208, 308: secondary storage device, 109: storage, 110, 210: communication controller, 112, 212: USB controller, 114, 214, 314: memory card interface, 115, 215, 315: memory card, 116, 118, 120, 216, 218: network controller, 122, 322: internal bus controller, 124, 224, 324: indicator, 142, 144, 242: communication port, 150: control engine, 151: controller, 152: communication processing unit, 153: detection unit, 154: notification processing unit, 155: notification output unit, 160: information engine, 170: broker, 180, 360: log database, 200: security unit, 250: security engine, 260: security information, 300: safety unit, 350: safety engine, 400: functional unit, 450: power supply unit, 500: field device, 600: support device, 700: SCADA device, 850, 860: user interface screen, 851, 852, 865: column, 861, 862, 863: tab, 866: input column, 867: input region, 900: database, 1104: program, 1106: key, 1110: certificate, S1 to S8: step

## Claims

1. A control device comprising:
a controller configured to execute a control arithmetic calculation controlling a control target;
a communication unit configured to execute processing for secure communication using a certificate;
a detection unit configured to detect that an end of the certificate approaches; and
a notification unit configured to notify that the end of the certificate approaches.

2. The control device according to claim 1, wherein
the end of the certificate is an expiration date of the certificate, and
the notification unit issues notification that the expiration date of the certificate approaches at certain timing before the certificate is lapsed.

3. The control device according to claim 1 or 2, further comprising a chassis, wherein the notification unit includes an indicator that is provided in the chassis and notifies that the end of the certificate approaches by light.

4. The control device according to claim 1 or 2, wherein the notification unit includes a sound output unit that generates sound in order to issue notification that the end of the certificate approaches.

5. The control device according to claim 3 or 4, wherein the notification unit issues notification that the end of the certificate approaches by an e-mail.

6. A control system comprising:
the control device according to any one of claims 1 to 5; and
a setting device configured to set notification timing before the certificate reaches the end of the certificate to the control device.

7. The control system according to claim 6, wherein when a plurality of the certificates are stored in the control device, the setting device collectively displays the expiration dates of the plurality of certificates.

8. A control system comprising:
the control device according to any one of claims 1 to 5; and
a communication device configured to conduct communication with the control device,
wherein the control device accepts a new certificate before the expiry date, transmits an update request to the communication device, and updates the certificate by discarding an old certificate when the communication device approves the new certificate.
